# EUROPEAN PATENT SPECIFICATION

(11) **EP 0 703 836 B1**
(45) Date of publication and mention of the grant of the patent: **03.06.1998**
(21) Application number: 93921190.0
(22) Date of filing: 31.08.1993
(51) Int. Cl.: B05D 1/28, C08J 3/20

(54) **PROCESS FOR PREPARING LUBRICANT-CONTAINING PELLETS OF THERMOPLASTICS**
VERFAHREN ZUR HERSTELLUNG VON THERMOPLASTISCHEN PELLETS MIT SCHMIERMITTEL
PROCEDE DE PREPARATION DE PASTILLES DE RESINES THERMOPLASTIQUES CONTENANT UN LUBRIFIANT

(30) Priority: 01.09.1992 DE 4229088
(43) Date of publication of application: 03.04.1996
(73) Proprietor: E.I. DU PONT DE NEMOURS AND COMPANY, Wilmington Delaware 19898 (US)
(72) Inventor: MICHELS, Klaus, Josef, Maria, D-4700 Hamm (DE); PAGILAGAN, Rolando, Umali, Parkersburg, VA 26104 (US)
(74) Representative: Abitz, Walter, Dr.-Ing.
(86) International application number: US9308004
(87) International publication number: WO9405432

(56) References cited:
- WO-A-90/04463
- US-A- 1 749 251
- US-A- 4 256 785
- US-A- 4 281 036
- US-A- 4 420 279
- US-A- 4 519 924
- US-A- 4 610 797
- US-A- 4 656 093
- US-A- 4 661 280
- US-A- 4 704 330
- US-A- 5 006 368
- US-A- 5 236 649

## Description

The present invention relates to a process for the production of lubricant-containing pellets of thermoplastics, and especially those pellets which contain the lubricant in the form of a film firmly adhering to the surface of the pellets. The pellets can be used for injection molding purposes.

Articles made of thermoplastic materials are conventionallly produced from pellets of the thermoplastic resins by injection molding. Auxiliary agents (lubricants) are added to the pellets to achieve trouble-free processing. These agents control the rheology of the melt, and often they involve further positive effects for processing and/or for the optimization of the final product.

Small injection molding machines with short dwell times are especially susceptible to malfunctions occurring in the screw region where the polymer begins to melt. It has been shown that these malfunctions can be eliminated, if suitable lubricants are present in sufficient amounts on the pellets. This cannot be accomplished by a lubricant incorporated in the thermoplastic resin; the lubricant must rather be present on the outer surface of the pellets in order to be effective on the machine walls.

The lubricants generally used for pellets of thermoplastic resins are products of fat chemistry, mostly those of stearin, olein, glycerol; waxes such as montan wax and polyolefin wax: and metal stearates such as aluminium stearate, calcium stearate, zinc stearate and magnesium stearate.

An amount of from 0.01 to 0.5% by weight of said metal stearates in the form of a finely divided powder is usually added to the pellets of thermoplastics and is admixed in continuous mixers or double-cone batch blenders, wherein the metal stearate powder becomes attached to the surface of the pellets. However, the adhesion to the pellets of the metal stearates powder is insufficient so that upon shipment and, more particularly upon the use of pneumatic (pressurized air) conveying systems. a separation of the metal stearate powder occurs. Due to this peel-off. not only the effective lubricant content on the pellet surface is reduced, resulting in a loss in functionality of the pellet-lubricant adduct, but also the released powder causes process-technological drawbacks such as soiling the shipment containers and plugging the filters of conveyor units. In addition, the deposition on the floors of the production plant constitutes a particular source of danger, since areas covered with metal stearates are extremely slippery.

WO 90/04463 discloses plastic pellets coated with a fused layer of certain waxes or polymeric materials, but requires heating the plastic pellets to a temperature below the softening or fusing point of the wax or polymeric material additive, which can disadvantageously discolor the plastic pellet.

Therefore, the desire has existed for a long time to provide pellets of thermoplastics with a firmly adhering film that has the same lubricant properties as the pellets provided with powdery metal stearates without the disadvantage of the powder coming off.

The manufacture of such film-coated pellets of thermoplastic resins is relatively simply to accomplish for most of the organic materials by way of an application of the film material in the molten state, for example by tumbler coating. Molten solutions of metal stearates can also be applied to pellets to form lubricant coatings (cf. European Patent Specification 0 280 221 B1), however, such coatings are sometimes found to be irregular or uneven, or do not adhere as tightly to the pellets as the lubricant of this invention.

Another approach for firmly linking metal stearate lubricants to the pellets consists of including-the lubricants in the pellets. However, thereupon it was found that, mainly in small injection molding machines with short dwell times, the pellets including the lubricant resulted in malfunctions of the feeding process. Thus, a trouble-free functionality of the lubricant-pellet adduct is ensured only if the lubricant will become effective prior to the pellet being melted, thus, if the lubricant is available on the surfaces of the pellets.

Therefore, it was the object of the present invention to provide pellets of thermoplastic resins, to which pellets the lubricant has been firmly bonded, while the action of the lubricant is not adversely affected thereby.

Surprisingly it was found that it is possible to provide lubricant-containing-pellets of thermoplastic resins wherein the lubricant is present on the surface of the pellets in the form of a firmly adhering lubricant film using a coating process as defined hereinafter. Moreover it was found that a particularly good result is achieved where the lubricant is comprised predominantly (on a weight basis) of an aluminum salt of a fatty acid.

The present invention relates to a process for the preparation of lubricant-containing pellets of thermoplastic resins, characterized in that
(a) the uncoated pellets of thermoplastic resins and a lubricant comprised of a metal salt of a fatty acid are combined and mixed at a temperature of from 20°C to 50°C,
(b) the resulting pellet-lubricant adducts are then kept in motion in a dense phase conveying system so that they are subjected to a sufficient number of mutual impacts and shear forces whereby a firmly adhering lubricant film is formed on the pellets.

As used herein, the term "firmly adhering film" refers to a continuous film which is essentially free from gaps or holes. The firmly adhering film of this invention is thereby distinguishable from lubricant coatings of the prior art, which tend to resemble powder coatings. This distinction is visible when viewing the coated pellets under a microscope. The firmly adhering film of the present invention will appear somewhat as a varnish on the pellet. It will not easily be visible apart from the fact that light reflects off it somewhat differently as compared to an uncoated pellet. Conversely, the coatings of the prior art will appear under the microscope as discontinuous coatings, *i.e*., as dusts or very finely divided powders.

The term "is comprised predominantly (on a weight basis) of an aluminum salt of a fatty acid" means that where the lubricant contains more than one component, an aluminum salt of a fatty acid is the component present in the greatest amount on a weight basis.

Preferred according to the present invention is the production of pellets having a lubricant content of from 0.01 to 0.5% by weight, and especially from 0.05 to 0.15% by weight.

The lubricants of the lubricant-containing pellets of thermoplastic resins produced according to the invention consist preferably of from 75 to 100% by weight of an aluminum salt of a fatty acid and of from 25 to 0% by weight of fatty acids and fatty alcohols; waxes, especially montan wax and polyolefin wax; and esters and/or metal salts (apart from aluminum) of fatty acids, especially sodium-, magnesium-, calcium- and zinc-stearate, stearyl stearate, and the lithium, odium, and calcium salts of montanic acid. Where the lubricants (other than the metal salts of fatty acids) are in the form of a powder, the powder is preferably milled to a particle size of less than about 1 µm (micron).

According to present invention preferred is a lubricant comprising 75 to 100% by weight, and especially from 90 to 100%, of an aluminum stearate, and especially aluminum distearate.

According to the present invention. the thermoplastic resin may be any melt-processable solid thermoplastic material. The preferred thermoplastic resins include polyesters, polyacetals, polyacrylates, polyamide and/or copolymers or mixtures containing said thermoplastic resins, among which polyamides and copolymers containing polyamides are more preferred. The polyamides of the present invention have been selected from Nylon 6, Nylon 6/6, Nylon 6/9, Nylon 6/10, Nylon 6/12, Nylon 11, Nylon 12 and Nylon 12/12, among which copolymers containing polyamides of adipic acid, hexamethylene diamine and/or Caprolactam are preferred.

According to the present invention the lubricant-containing pellets of thermoplastic resins may contain up to 70% by weight of additives and filler materials, including stabilizers, and especially antioxidants and UV absorbents; plasticizers; fillers and minerals, especially talc, chalk, kaolin, wollastonite, slate meal, mica powder and baryte; pigments and dyes; reinforcing agents and impact modifiers, especially glass fibers; flame retardants and nucleating agents, especially salts, talc, HT-Nylon, fluorocarbon compounds.

In a preferred embodiment of the process according to the invention, combining and mixing the pellets with the lubricant is carried out at a temperature of from 40°C to 50°C. By means of the process the pellets of thermoplastic resins can be coated without any thermal-oxidative damage (discoloration) in the presence of air.

According to the present invention, in a preferred process embodiment the lubricant is an aluminum salt of a fatty acid, preferably an aluminum stearate, more preferably aluminum distearate, and the pellets are of polyamide, and preferably are Nylon 6/6.

Any device in which the pellets are subjected to the above-described motions is suitable to be used in the process according to the invention. In a preferred embodiment of the process according to the invention the process is operated in a continuous mode (continuous process). It is particularly preferred that the process step (B) takes place in a dense phase conveying system as described in Example 2.

The present invention further relates to the use of the lubricant-containing pellets of thermoplastic resins for the manufacture of thermoplastic resin-based articles.

The lubricant-containing pellets of thermoplastic resins show the same functional properties as the pellets provided with powdery lubricants however, they do not tend to tend the lubricant coming loose therefrom. Moreover, the process according to the invention allows a lubricant film to be applied onto thermolabile pellets of thermoplastic resins, and especially onto pellets.

In another embodiment of the present invention, it is possible to provide lubricant containing pellets of thermoplastic resins wherein at least two lubricant layers are present. a first lubricant layer is present on the surface of the pellets in the form of a firmly adhering lubricant film using a coating process as defined herein above. At least one additional lubricant layer which is comprised of a lubricant having a melting point of 140°C or less is present on the surface of the first lubricant layer. Suitable lubricants for the additional lubricant layer(s) are known i the art and include, but are not limited to, montan wax, polyolefin wax, paraffin, N-stearyl eruceamide, and metal stearates. Such additional lubricant layer(s) can be applied by conventional techniques known in the art such as melt spray and tumbling coating techniques.

The present invention is further illustrated by the following Examples:

### EXAMPLES

### Example 1 (Coating Test)

A reactor comprising a 100 mm diameter vessel capable of being rotated and performing gyroscopic motions is charged with 100g of Nylon 6/6 and 0.1g of powdery lubricant; then, mixing is carried out at room temperature of 60 rpm.

The film forming property of various lubricants at a stirring period of 15 minutes is shown in Table I.

**Table I**

| Example | Lubricant | Remarks |
|---|---|---|
| A | Aluminium Distearate | Film Formation |
| B | Aluminum Tristearate | Firm Formation |
| C | Stearol Stearate | Partial Film Formation |

### Example 2 (Continuous Coating)

For continuously coating polyamide pellets with aluminium distearate at a temperature of from 40°C to 50°C, the pellets of Nylon 6/6 as available after drying and having a regular oval-cylindrical shape are supplied to a continuous mixer, into which at the same time aluminium distearate is introduced in a controlled amount. In the mixer the stearate present as the fine powder is uniformly powdered onto the pellet surfaces.

Through an exit port in the bottom of the mixer the powder-coated pellets are passed through a commercially available dense phase conveying system, (sold.*e.g*., by the companies WAESCHLE (D-7980 Ravensburg), GERICKE (D-7703 Rielasingen) and BUEHLER (CH9420 Uzwil). The conveying system will typically be 200 to 350 m in length, preferably about 300 m. At the end of the conveying system the powdered layer, which initially is loosely adhered to the surface, becomes a firmly adhering uniform coating. The product is thereby essentially free from aluminum distearate dust.

### Example 3 (Adhesion Test)

An amount of 2.5g of Nylon 6/6 pellets coated with 0.1% by weight of aluminum distearate (Example 2) and an amount of 2.5g of conventional Nylon 6/6 pellets containing 0.1% by weight of aluminum distearate (lubricant in powder form) each are washed in 40 ml of Freon® 113 for 10 seconds at a speed of the stirring rod of 88 rpm. After the washing liquid is poured off, the pellets are dried, and the aluminum distearate content is determined.

As a result of the determination the Nylon 6/6 pellets prepared according to the conventional method, (only passed through a continuous mixer) has a residual aluminum distearate content which was by 30% lower.

In the pellets coated by means of the process according to the present invention, 95% to 97% of the aluminum distearate added are present as a firmly adhered film.

### Example 4 (Use Test)

Using a small molding machine (NETSTAL AG., Schweiz, Model N 350/150 S with a standard NETSTAL low compression (2.6) screw), the screw retraction time (SRC) is measured at a hold up time of three minutes for each of the Nylon 6/6 pellets treated with 0.1% by weight of aluminum distearate as specified in Table II. The results are also set forth in Table II.

**Table II**

| Example | Sample | SRC (Seconds) |
|---|---|---|
| D | Melt-incorporated | 10.4 to 20.2 |
| E | Powder-coated | 10.1 to 14.5 |
| F | Film-coated/Example 2 | 9.0 to 10.6 |

## Claims

1. A process for the preparation of lubricant-containing pellets of thermoplastic resins, characterized in that
(a) the uncoated pellets of thermoplastic resins and a lubricant comprised of a metal salt of a fatty acid are combined and mixed at a temperature of from 20°C to 50°C,
(b) the resulting pellet-lubricant adducts are then kept in motion in a dense phase conveying system so that they are subjected to a sufficient number of mutual impacts and shear forces whereby a firmly adhering lubricant film is formed on the pellets.

2. The process according to claim 1, characterized in that the process is a continuous process.

3. The process according to claim 1, characterized in that at least one additional lubricant layer is applied to the surface of the firmly adhering lubricant film.

4. The process of Claim 1, characterized in that the lubricant comprises from 75 to 100 percent by weight of an aluminum salt of a fatty acid and from 0 to 25 percent by weight of fatty acids, fatty alcohols, wax, and esters and/or metal salts of a fatty acid that is not an aluminum salt of a fatty acid.

## Patentansprüche

1. Verfahren zur Herstellung von schmiermittelhaltigen Pellets aus thermoplastischen Harzen, dadurch gekennzeichnet, daß
(a) die unbeschichteten Pellets aus thermoplastischen Harzen und ein Schmiermittel aus einem Metallsalz oder einer Fettsäure vereinigt und bei einer Temperatur von 20°C bis 50°C gemischt werden,
(b) die erhaltenen Pellet-Schmiermittel-Addukte anschließend in einem Dichtphasenbeförderungssystem in Bewegung gehalten werden, so daß sie einer genügenden Anzahl von gegenseitigen Zusammenstößen und Scherkräften ausgesetzt werden, wodurch ein fest haftender Schmiermittelfilm auf den Pellets gebildet wird.

2. Verfahren nach Anspruch 1, dadurch gekennzeichnet, daß das Verfahren ein kontinuierliches Verfahren ist.

3. Verfahren nach Anspruch 1, dadurch gekennzeichnet, daß wenigstens eine zusätzliche Schmiermittelschicht auf die Oberfläche des fest haftenden Schmiermittelfilms aufgebracht wird.

4. Verfahren nach Anspruch 1, dadurch gekennzeichnet, daß das Schmiermittel 75 bis 100 Gew. -% eines Aluminiumsalzes oder einer Fettsäure und 0 bis 25 Gew. -% Fettsäuren, Fettalkohole, Wachs und Ester und/oder Metallsalze einer Fettsäure, welche nicht ein Aluminiumsalz einer Fettsäure sind, umfaßt.

## Revendications

1. Procédé pour la préparation de granules de résines thermoplastiques contenant un lubrifiant, caractérisé en ce que
(a) les granules non revêtus de résines thermoplastiques et un lubrifiant composé d'un sel de métal d'un acide gras sont combinés et mélangés à une température de 20°C à 50°C,
(b) les produits d'addition granule-lubrifiant résultants sont ensuite maintenus en mouvement dans un système de transport à phase dense de sorte qu'ils sont soumis à un nombre suffisant d'impacts mutuels et de forces de cisaillement pour qu'un film lubrifiant adhérant fermement soit formé sur les granules.

2. Procédé selon la revendication 1, caractérisé en ce que le procédé est un procédé continu.

3. Procédé selon la revendication 1, caractérisé en ce qu'au moins une couche de lubrifiant supplémentaire est appliquée sur la surface du film lubrifiant adhérant fermement.

4. Procédé selon la revendication 1, caractérisé en ce que le lubrifiant comprend de 75 à 100% en poids d'un sel d'aluminium d'un acide gras et de 0 à 25% en poids d'acides gras, d'alcools gras, d'une cire, et d'esters et/ou sels de métal d'un acide gras qui ne sont pas un sel d'aluminium d'un acide gras.
